# EUROPEAN PATENT APPLICATION

(11) **EP 2 782 320 A1**
(43) Date of publication of application: **24.09.2014**
(21) Application number: 13382099.3
(22) Date of filing: 20.03.2013
(51) Int. Cl.: H04L 29/08

(54) **Method, system and devices for dynamic content distribution**

(71) Applicant: Telefonica S.A., 28013 Madrid (ES)
(72) Inventor: Pascual Blanco, Fernando, 28013 Madrid (ES); Nunez Sanz, Manuel, 28013 Madrid (ES)
(74) Representative: Carpintero Lopez, Francisco

(57) **Abstract**

A method, system and devices for improved dynamic content distribution. The embodiments of the present invention suggest an innovative approach, which allows to save network resources in both content provider network and consumer access network when the same content is being delivered from the same content server or node (under any delivery architecture) to consumers into the same network

## Description

### BACKGROUND OF THE INVENTION

### Technical field

The present invention relates to the field of content distribution and more specifically to a method, system and device for improving distribution of contents in communications networks.

### Description of related art

As the popularity of applications increases, such as video on demand, Internet television services, live events transmissions..., the number and size of the files and other media objects to be distributed to end users over communications networks (as Internet) is significantly increasing.

When service providers needed to serve such files to their end users, most of the time, they distributed them by hosting them in servers in their data center.

Unicast flows are a widespread solution used by content providers in content delivery to users. These flows are typically multimedia contents (e.g., text, audio, video, software, etc., and any combination of them) and sometimes they have high bandwidth and low latency requirements.

In a typical distribution architecture, a user equipment is connected to a communications network. The user equipment can be a computer, a laptop, a note book, a mobile phone, an smart phone, a set top box, a TV with internet capabilities or any other type of user equipment which is able to access to a communications network. When the user decides to consume a content, the user equipment uses a signaling channel to request said content to the content server. For said content request, communications protocols as Session Initiation Protocol, SIP, or Hypertext Transfer Protocol, HTTP, or other types of communication protocols can be used. Then the content server delivers the flow to the client through the media channel, using Real Time Transport Protocol,. RTP, or any other type of communications protocol.

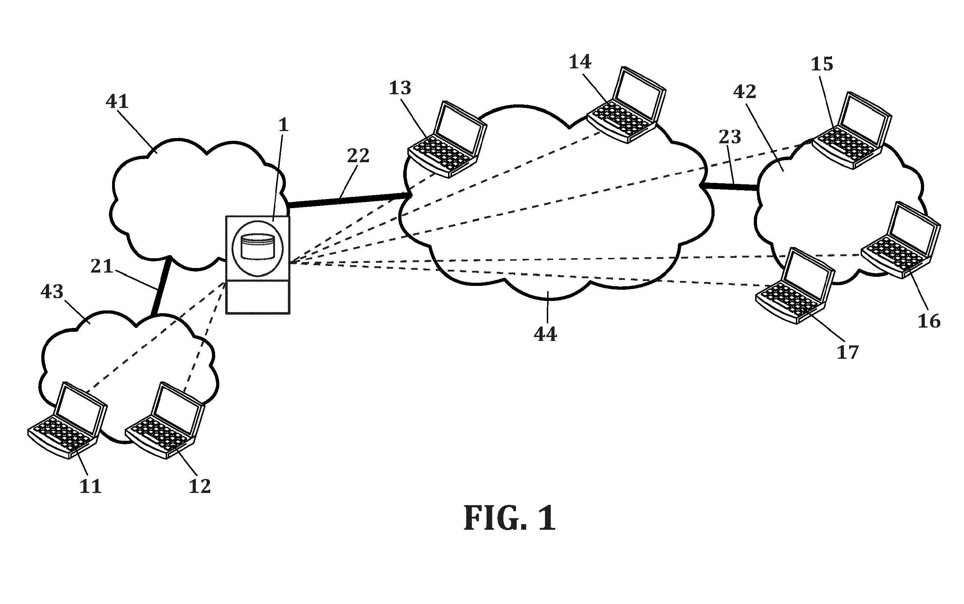

In the traditional network architecture, the content server (1) is allocated in a server network 41 (which may be anywhere within the Internet or another remote network) and the content is delivered from there. Figure 1 depicts the traditional delivery architecture. The consumers (that is, the user equipments which may request the content to the server) can be anywhere and they may belong to different communications networks, for example, local networks (42, 43), transport networks (44) or even the same network of the server (41). The different networks are connected through access networks (21, 22 or 23).

The consumers (11-17) establish unicast connections towards the content server (1) and the content is delivered individually.

Even in the case when consumers (15-17) are in the same local network an individual flow is created and maintained for every consumer. Note that in that case, every individual flow is delivered through the same access network (23).

But the consumer pattern is not always uniform. There may be sudden bursts of traffic requesting web based content from consumers located around the globe. To accommodate for the demand, service providers needed to estimate and provision additional servers in quantities enough for handling peak loads. Moreover, on the Internet, there is always a factor of RTT (Round Trip Time) and Packet Loss that needs to be considered, and these parameters have a higher effect on the consumers who are located at greater distances from the servers. To accommodate to these limitations, Content Delivery Networks, CDNs, were created to deliver content to users. The main target of the CDNs is the distribution of contents in several servers over the Internet to provide high performance and high availability over the classical network architecture. In addition of that, CDNs provide traffic distribution over operator networks, avoiding congestion in critical network segments.

A Content Delivery Network (also called Content Distribution Network) is a network of servers (usually hosted by a service provider) that cooperate to deliver content to end users. Said servers are located in multiple locations of the world so as to achieve optimal bandwidth and network utilization for clients, as the content could always be served from a server that is relatively near to the consumer requesting for it. And besides, since multiple servers are used, the load is distributed and consumers get faster better quality content. There are several key type of servers in a Content Delivery Network (CDN): The Origin Server(s) where the content to be distributed is originally stored and Surrogate Servers (also called edge servers or cache servers), where the content is delivered to the user.

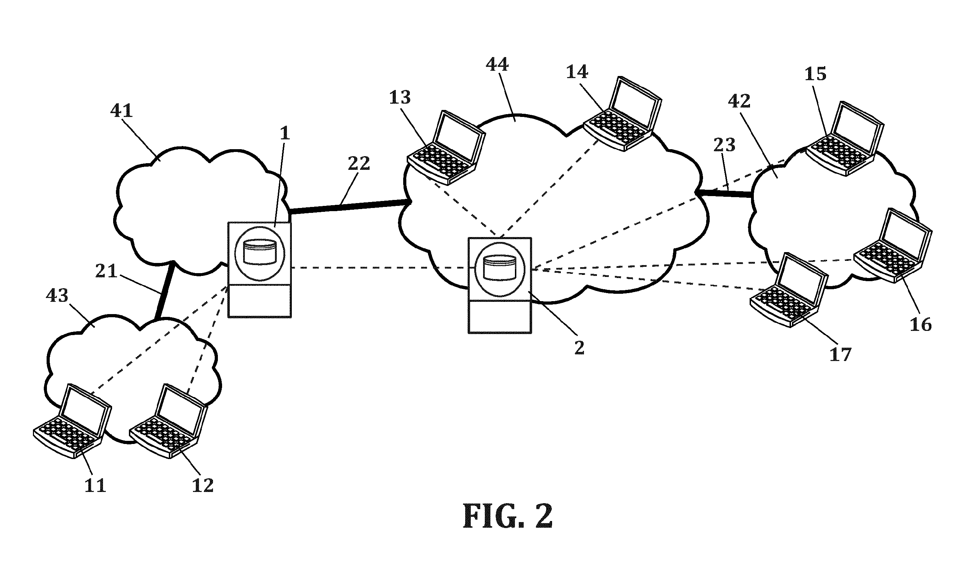

Figure 2 depicts a content delivery architecture according to the prior art. In this case, there is another server (a surrogate server), in another network (44) which has a copy of the content to be delivered. In this case the CDN distributes the traffic load between its servers; server 1 delivers the content to consumers 11 and 12, and consumers 13-17 establish unicast connections towards the CDN server (2). That way, the access network 22 has been decongested because the CDN topology. Even in the case consumers (15-17) are in the same local network, the content is delivered individually. Note that in that case, as before, every individual flow is delivered through the same access network (23).

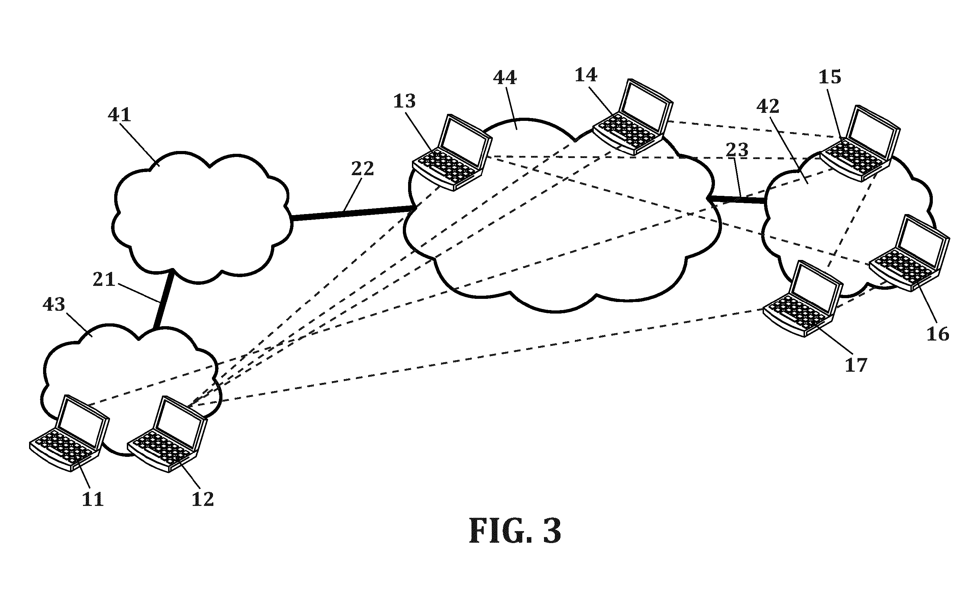

Peer to peer (P2P) networks are another option to distribute contents within the network. In that case each computer belonging to the P2P network, a peer, can act as client and as server. Contents are distributed along the P2P network within the peers. Knowing what peers have the content, a consumer can obtain the content from them. Figure 3 depicts the P2P overlay and the way peers (15-17) in the same local network (42) would obtain the same content from other peers (11-14). Note that peer 15 can also obtain part of the content from peer 17 and vice versa. As it is shown, to obtain the content using a P2P network, peer (15-17) will consume resources not only at his access network (23) but also even in other peers access networks (21). P2P networks are not aware of where the peers are in order to avoid access networks resources consumption.

The previously cited, unicast content delivery solutions tend to exhaust network resources and especially when the same content is delivered several times it is a waste of network resources. That problem is principally harmful if the network has limited resources (for example limited bandwidth), as specially happens with access networks when several users requests for the same content from the same local network. That causes overloading in network segments (mainly in access segment (21,22,23) and as consequence users to get a bad quality or even not be able to get the content. In the same line, introducing new intermediate network elements (CDN approach or other solutions based in relay elements) only solves server scalability issues, but never bandwidth limitations in access networks, which become a critical point. Even the P2P approach is not able to avoid limitations in access networks.

For the content providers, Unicast content delivery becomes a problem because they need a lot of network resources (mainly bandwidth) to deliver the content from a single server (in the traditional delivery architecture). When the server receives a lot of requests, it needs a high bandwidth to deliver contents properly, because it is delivering the same content to several locations (11-17), wasting network resources when the same content is delivered to consumers (15-17) located in the same local network. That problem was partially solved with CDNs because traffic flows are distributed along the network when needed, providing high availability and a lower latency for content delivery. Nevertheless there is still waste of network resources when the same content is delivered more than once from the same CDN node (2) to the same local network consumers (15-17). That waste of resources is not solved yet.

For the content consumers, usually the network communications bottleneck is located in the access network (in both fixed and mobile scenarios). That means that every effort to save access network resources is critical for consumer, providers and carriers. In the explained delivery architectures (see figure 1-3) a waste of access network resources has been shown when several consumers from the same local network request the same content from the content provider (even when a CDN is used). Even in the P2P networks access network resources are wasted, not only in the content consumer side but also in the content server side.

Patent Application WO2012011450 has tried to solve some of these problems, but it still presents serious drawbacks when compared with the present invention. Patent Application WO2012011450 proposes a static network architecture in which when playback devices request contents to distribution devices they are instructed to acquire the content from a relay device that previously has acquired the content. Nevertheless, this new invention has two main differentials with that one: In the present invention, there are no static roles provided to the devices and therefore any device could act with any role. The idea is that final user devices can be dynamically distributed content relays without any initial pre-configuration, and in a totally transparent way for users. On the other hand, the present invention is conceived for deployment on final user devices and it is not a network architecture solution as the patent application WO2012011450.

Summarizing, existing solutions for delivering content to consumers are not efficient and they suppose a waste of network resources, especially when delivering content to consumers in the same local network.

The embodiments of the invention stated below will overcome at least some of these drawbacks.

### SUMMARY

The problems found in prior art techniques are generally solved or circumvented, and technical advantages are generally achieved, by the disclosed embodiments which provide a method system and device for dynamic local content delivery.

In a first aspect a method of dynamic content distribution to user equipments, the method comprising the following steps:
- A server receiving a message requesting a first content, from a first user equipment belonging to a first communications network
- The server checking if there is any other user equipment belonging to said first communications network registered in a list for said first content, said list including for each communications network, user equipments belonging to said communications network which have previously requested the first content to the server.
- If there is no user equipment belonging to said first communications network registered in the list for said first content, delivering said first content from said server to said first user equipment.
- If there is at least a second user equipment belonging to said first communications network registered in the list for said first content, the server redirecting the first user equipment to said second user equipment in order to get the content.
- The server registering said first user equipment in the list for said first content.

Said first communications network may be a local area network. The user equipment may be for example a computer, a laptop, a note book, a mobile phone, an smart phone, a set top box, a TV with internet capabilities or any other type of user equipment.

In an embodiment, the message requesting the first content sent by the first user equipment includes information which allows reaching the first user equipment within said first communications network and the server may store said information which allows reaching the user equipment within said communications network in said list for said first content. Said information which allows reaching the first user equipment within said first communications network may include a private IP address of the first user equipment in the first communications network. Said information may include, for example, a private IPv4 network address and a TCP port.

In an embodiment, the step of redirecting the first user equipment to said second user equipment includes: the server sending to the first user equipment a message including information which allows to reach the second user equipment within the first communications network, where said information which allows to reach the second user equipment, has been included by the second user equipment in a previous request for said fist content sent by the second user equipment to the server and the method may further include: the first user equipment sending a message requesting said first content to the second user equipment using the information sent by the server which allows to reach the second user equipment. The server may include in the redirection message to the first user equipment a backup list, said backup list including information which allows to reach other user equipments belonging to the first communications network included in the list for said first content and if the first content is not available in said second user equipment or the second user equipment is not reachable, the first user equipment sends a request for said first content to another user equipment in the backup list.

In an embodiment, when the first content is real-time, the server deletes the register of said first user equipment from the list for said content after having delivered the content to said first user equipment and if the first content is on demand the server deletes the register for said first user equipment from the list for said content after the time to live of said content has expired.

In an embodiment, if the server is informed that a user equipment included in the list for a certain content is not reachable, the server deletes said user equipment from said list and the server may also delete said first user equipment from the list for said content and for said first communications network after a certain period of time.

The server may belong to a second communications network different from the first communications network, where the second communications network is connected to the first communications network by an access network.

In an embodiment, after receiving the request, the server may identify the first communication network to which the first user equipment belongs, for example, using the public network address used by the first user equipment in the request.

In another aspect is presented a system for dynamic content distribution to user equipments, the system comprising:
- A first server which comprises:
   - receiving means for receiving a message requesting a first content from a first user equipment belonging to a first communications network
   - means for checking if there is any user equipment belonging to said first communications network previously registered in a list for said first content, said list including for each communications network, user equipments belonging to said communications network which have previously requested the first content to the server.
   - means for, as a result of the checking, if there is no user equipment belonging to said first communications network in the list for said first content, sending said first content from said server to said first user equipment and if there is at least a second user equipment belonging to said first communications network registered in the list for said first content, the server sending a message to the first user equipment redirecting the first user equipment to said second user equipment.
   - means for, after the receiving means receives the message requesting the first content from the first user equipment and the checking has been performed, registering said first user equipment in the list corresponding to said first content
- The user equipment belonging to the first communications network, said user equipment comprising:
   - means for sending a request for a first content to the server.
   - means for, after sending a request for a first content to the server, receiving a redirection message from the server to a second user equipment and means for, after receiving said redirection message, requesting said first content to the second user equipment.

In another aspect is presented a server for dynamic content distribution to user equipments, the server comprising:
- receiving means for receiving a message requesting a first content from a first user equipment belonging to a first communications network
- means for having access and updating a list for each content stored in said server, said list including for each communications network, user equipments belonging to said communications network which have previously requested said content to the server
- means for checking if there is any user equipment belonging to said first communications network, registered in the list for said first content
- means for, as a result of the checking, if there is no user equipment belonging to said first communications network registered in the list for said first content, delivering said first content from said server to said first user equipment and if there is at least a second user equipment belonging to said first communications network registered in the list for said first content, the server sending a message to the first user equipment, redirecting the first user equipment to said second user equipment.
- means for, after the receiving means receives the message requesting the first content from the first user equipment and the checking has been performed, registering said first user equipment in the list corresponding to said first content

In another aspect is presented a user equipment belonging to a first communications network, said user equipment comprising which comprises:
- means for sending a message requesting a first content to a server.
- means for including in said message, information which allows to reach said first user equipment within said first communications network
- means for, after sending a request for a first content to the server, receiving a redirection message from the server to a second user equipment and means for requesting said first content to the second user equipment.
- means for, after receiving from another user equipment belonging to the first communications network, a request message for a content available in the user equipment, delivering said content to the requesting user equipment.

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a method, system, devices and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a schematic block diagram of content delivery using a prior art traditional delivery architecture.
Figure 2 shows a schematic block diagram of content delivery in a content delivery network of the prior art.
Figure 3 shows a schematic block diagram of content delivery using a prior art peer to peer procedure.
Figure 4 shows a schematic block diagram of content delivery according to a proposed embodiment of the present invention.
Figure 5 shows a schematic block diagram of content delivery according to a proposed embodiment of the present invention.
Figure 6 shows a schematic block diagram of real time content delivery according to an exemplary embodiment of the present invention.

Throughout the figures like reference numerals refer to like elements.

### DESCRIPTION OF EMBODIMENTS

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The present invention deals with content delivery to various user equipments. The presented embodiments are going to refer to media content but the embodiments are applicable as well to any other type of content. Said media content includes but not limited to live and on demand media content like music, images, video, multimedia, audio or any other type of media content or media objects.

The following embodiments solves some of the problems found in the prior art content delivery techniques.

The embodiments of the present invention suggest an innovative approach, which allows to save network resources in both content provider network and consumer access network when the same content is being delivered from the same content server or node (under any delivery architecture) to consumers into the same network.

In one embodiment, that goal is achieved by delivering the content once instead of several times when several user equipments into the same certain network are consuming the same content. In the proposed system, the content will be delivered only to the first consumer in that certain network and the necessary actions are performed so the content delivery within said certain network will be made from said first consumer. A redundant procedure may be proposed in case of a fail in that first consumer. The proposed procedure can also provide a Quality of Service (QoS) enhancement because less network resources are needed to deliver the same content to the same consumers that in the original scenario, achieving a lower latency and a lower jitter.

Said consumers' network may be a local area network but it can be any other type of network. A local area network (LAN) is a network that interconnects user equipments (computers, laptops, Smart phones, notebooks or any other user equipments) in a limited area such as a home, school, computer laboratory, hospital, or office building (or even bigger areas as a campus, an small village) using wired or wireless network connections. The defining characteristics of LANs, in contrast to wide area networks (WANs), include their usually higher data-transfer rates smaller geographic area, and lack of a need for leases telecommunication lines. The local area network is connected to other networks (for example, the content provider network) through an access network.

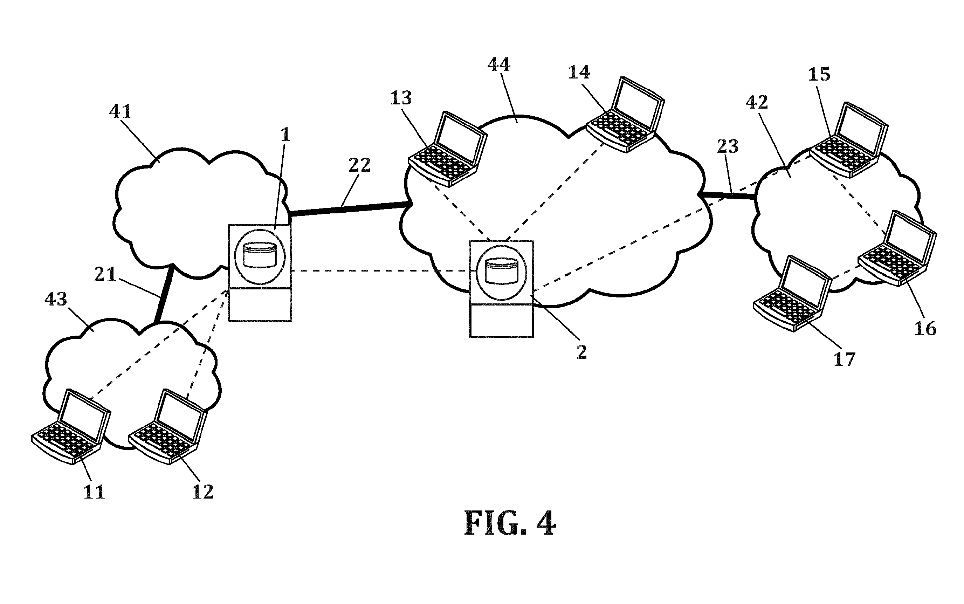

Figure 4 shows an example of the proposed modifications within the content delivery architecture. Servers (1 or 2) could be content servers or CDN server nodes. There are three consumers (user equipments consuming a certain content) 15-17, in the local network, the content is only delivered to the first user equipment (15) and from said user equipment it is delivered to the other two user equipments (16 and 17) in the same local network. This way, the network resources employed to deliver the content through access network (23) are the same than the employed in the case where an only user equipment is consuming the content. It is also depicted that the proposed modifications can coexist with the current existing technology (server (2) and user equipments (13-14)).

The server where the content is stored (content server) will need to be aware of how many user equipments are requesting the same content in the same network (e.g. a local network). This functionality may be performed by a part of the server (a module) called Local Network Awareness Module (also called LNA module or LNAM). This can be done in different ways. It may depend for example from the transport protocol and/or type of addresses used:
- For example under IPv4, user equipments typically have assigned private IP addresses and a NAT/PAT (Network Address Translator or Port Address Translator) is performed. That means that the IP addresses of the devices will not be the public IP addresses of the requests arriving to the server and typically all the public IP addresses (the IP address seen by the server in every content request) used by the user equipments of the same local network will belong to a certain pool. In that case, the public IP address can be therefore used to identify user equipments in the same local network.
- Under IPv6, user equipments in the same local network will typically belong to the same prefix, and that can be used to identify users in the same local network. In case of any type of addressing translation, a method similar to the IPv4 procedure should be used.
- Other procedures can be used to identify user equipments in the same local network. For example, the server can request to the user equipment a local network identifier or, using an user equipment's ID, the server can consult a general database in a network node to get the local network identifier of the user equipment.

The content server (e.g. in the LNA module) will dynamically store a dynamic list per content of the known networks consuming said content and for each network the known user equipments consuming or having consumed said content (called consumers) will be created. Known consumers are those requesting contents from the server and known networks are those with consumers requesting contents (said networks will have access to the content server, for example, through access networks, as shown in the figure).

In other words, the server stores a list per content of user equipments of each communications network which has previously requested said content.

Local networks lifetime within the dynamic list will be marked by the presence of user equipments belonging to local network within the dynamic list. Consumer lifetime will be defined by the content time to live (TTL) he is consuming. Content server will be responsible for defining a correct content TTL, taking into account the content nature: real-time content or content on demand.

The Time to live is a mechanism that limits the lifetime of data in a network. TTL uses to be implemented as a counter or timestamp attached to or embedded in the data. Once the prescribed event count or timestamp has elapsed, data is discarded. TTL prevents a data packet from circulating indefinitely and improve performance of data storage (e.g. caching) and/or the data privacy.

When the certain content TTL has expired for an user equipment, said user equipment is deleted from the list of known user equipments consuming said certain content and when all the user equipments consuming said certain content of a network have been deleted (the TTL has expired for all of them), said network is deleted from said dynamic list.

Said Local Network Awareness module may be located in the content server. However, in an embodiment, said Local Network Awareness module can be located in a second server or network node (or in other words, a second server or network node will perform the functions of identifying user equipments belonging to the same local network and maintaining and updating the above cited dynamic lists) different from the content server and the content server will send a message to said second server or network node to obtain the necessary information.

The content server behaviour will depend on the content the consumer is requesting and on the number of consumers in a local network. When the content server receives a content request from a user equipment from a network (e.g. a local network), the content server checks if it is the first time said content is requested by a user equipment of said network and if that is the case, the delivery procedure is as usual: the content server delivers the content to the user equipment.

At the same time, the content server will dynamically update the dynamic list of said content, including the data identifying said user equipment and said network in the dynamic list. In an embodiment, if there is no dynamic list for said content, the content server will create one.

In an embodiment, in the dynamic list per content, a dynamic list for said network will be created and in said second dynamic sub-list the data of the consumer will be included.

In an embodiment, the user equipment must include in the content request to the content server, information about how to be reached within its local network (that is, information which allows another user equipment belonging to the same local network to reach the user equipment sending the content request) for future content delivery within the network. In another embodiment, said information is included in a message sent by the content consumer to the content server after requesting the content. Said information could be, for example, a network address to reach said consumer (said user equipment) within its local network and in addition it could be included transport ports (in any transport protocol). Any other data (eg: network mask) also should be sent it in this request if necessary to reach said user equipment within the network. For example, content consumer will notify its private IPv4 address (that is, the address used inside the local network and not the public IPv4 address as translated by the NAT used to communicate with another external network if NAT is performed) and a TCP port where future redirected content requests will be attended. That must be generally applied to any network (local or not) and transport protocol.

In an embodiment, the data stored in the dynamic list for said user equipment will include said information about how to be reached within its local network.

Nevertheless, if an user equipment from a certain network requests a certain content, the server may check whether:
- a) Either the content is real-time and it is being delivered to another user equipment within the same network
- b) Or the content is on demand, it has been delivered to another user equipment within the same network, its lifetime (its TTL) is still valid and that user equipment is still available (reachable).

If the check is positive or in other words, if the content server finds out that it is not the first time said content is requested by a user equipment in the network and either the content is real-time delivered to another user equipment in the same network or the content has been previously delivered to another user equipment within the same network still available and the lifetime (time to live) of the content is still valid (it has not expired); then, in that scenario, the content server (2) will send a message (33) to the following user equipments requesting said content (16-17) redirecting them to a prior content user equipment (15-16) within that local network (still available and with the lifetime of the content not expired).

To perform said "redirection" the content server should be aware of how to reach the prior content user equipment at network level within its own local network. This can be done, as explained before, because the prior user equipment had included in the content request (or in a later message) information about how to be reached within its local network. Within the redirection (33) message, the information to reach the prior user equipment (15-16) must be included; at least its local network address and it could include any other information as transport ports.

At the same time, the content server will dynamically update the dynamic lists, including the data identifying said user equipment(s) requesting the content and the network it belongs, in the dynamic list correspondent to said content.

In an scenario, the content server may finds out that the user equipment requesting the content is already in the list for said content (that is, it is requesting a content that it has been delivered already to him). In this case, the content server may send a message to the user equipment indicating that the content is already available in said user equipment.

Note that, in an embodiment, not only the first one but all the user equipments which request the content (content consumers) (16-17) must notify (e.g. in the content request (31)) to the content server (2) how to be reached within its local network for future content delivery within the local network. Because in the future, the prior content consumer (the one currently delivering said content inside the local network) could become not available (or the lifetime of the content could expire) and a subsequent content consumer must become the consumer which delivers said content inside the local network. That means that all the content consumers must include (e.g. in the content request (31)) the necessary information to be reached within its local network (e.g. a network address and in addition it could be included transport ports in any transport protocol and any other necessary data).

For example, content consumer will notify its private IPv4 address and a TCP port where future redirected content requests will be served. That must be applied to any network and transport protocol.

In an embodiment, the data stored in the dynamic list for said consumer will include said information about how to be reached within its local network.

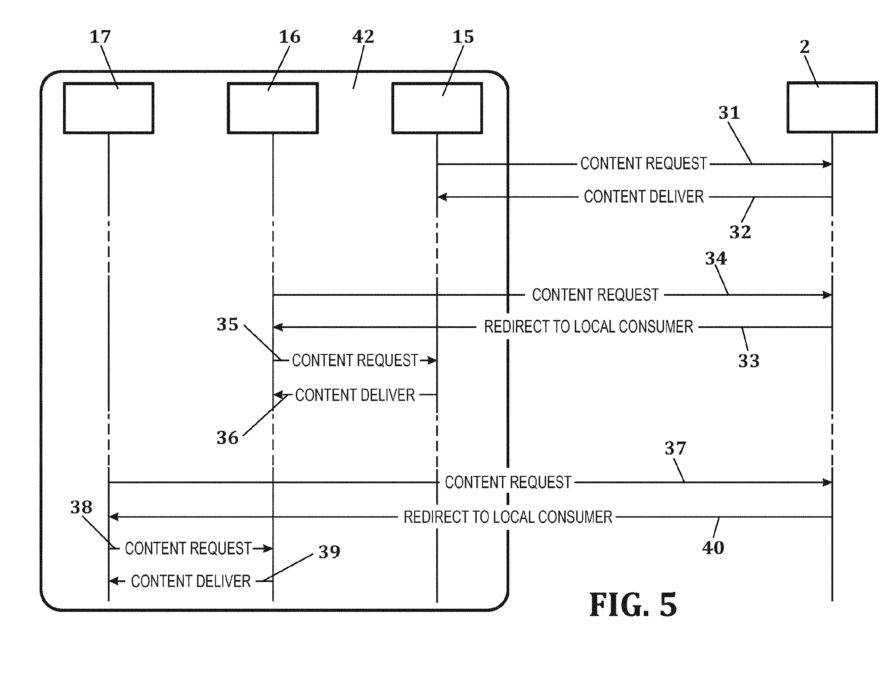

The redirection procedure could be done by the content server using any known procedure. Two redirect examples are shown in Figure 5.

In a first embodiment, a first user equipment (15) of a network (e.g. a local area network) (42) sends a content request message (31) to the content server (2) requesting a certain content and including information which allow other user equipments of its network to communicate with it. The content server receives the request and checks (in the dynamic list) if there is another user equipment (reachable) in the same network where the content is being delivered or where the content has been delivered before and it has not expired yet. As user equipment (15) is the first user equipment in said network which request said content, the checking is negative and the content server delivers the content (32) to the user equipment.

The dynamic list for said content will be updated including network (42) and user equipment (15).

Then, another user equipment (16) of the network (42) sends a content request message (34) to the content server (2) requesting a certain content and including information which allow other user equipments of its network to communicate with it. Then, the content server makes the previously explained checking and it finds out that there is another user equipment (15), available and where the content has been delivered before and it has not expired yet. Then the content server (2), sends a message (33) to user equipment (16) redirecting said user equipment to (15) (for example, giving the information necessary to reach user equipment (15) inside the local network). Then user equipment (16) sends a content request (35) to user equipment (15) (using said information) and user equipment (15) delivers (36) the content to user equipment (16).

At the same time, the dynamic list for said content will be updated including user equipment (16) inside the dynamic sub-list of the network (42).

Later, another user equipment (17) of the network (42) sends a content request message (37) to the content server (2). In that moment user equipment (15) is not available in the network (for example, because it is not active or not connected) or the lifetime (TTL) of the content has expired in user equipment (15).

In an embodiment, when the content server knows that user equipment (15) is not available any more or that the lifetime of the content has expired, then the content server deletes user equipment (15) from the dynamic list of said content.

Then, when the content server receives the content request (37), it makes the previously explained checking and it finds out that there is another user equipment (16), available where the content has been delivered before and it has not expired yet. Then the content server 2, sends a message (40) to user equipment 17 redirecting said user equipment to 16 (for example, giving the information necessary to reach user equipment 16 inside the local network). Then user equipment 17 sends a content request 38 to user equipment 16 (using said information) and user equipment 16 delivers the content to user equipment 17 (39).

The content server will as well, update the dynamic list for said content including user equipment 17 inside the dynamic sub-list of the network 42.

In the previous embodiment, when the content server redirects an user equipment's request to another user equipment within the same local network it must be reachable. In an alternative embodiment, in order to deal with a scenario where one of the prior local content consumers is not reachable and the content server is not aware of that (i.e. said consumer is still in the dynamic list as available), the redirection message must include if possible a user equipment backup list (including user equipments which has previously requested said content from the content server). That list will be composed at least by other prior user equipment within the local network (it could be more than one or all of them or even the content server (2) itself), and will be contacted if necessary. The user equipment which receives the redirection message, requests the content to the first user equipment in the list, if it is not available (or the content has expired in this user equipment), the user equipment requests the content to the second user equipment in the list and so on. In the case where any prior content consumer is not reachable, content consumer will finally request the content again to the content server (optionally, with a message saying that the content is not available in the user equipments of the list).

Traditional user equipments behaviour will need to be modified because additional features will be needed. In addition to consume a content, it will be responsible of serving it if necessary.

If a user equipment receives a content request, it should serve it to the requester. For this purpose, either it should serve a real-time content if it is receiving the content from the content server or from another user equipment or it should serve an on demand content if its lifetime is still valid. If it is not valid, it will send an error message to the user equipment requesting the content.

In an embodiment, the content server may know the lifetime of the content in every content consumer, so non-valid lifetime redirections should not be performed. In order to do that, the content server can periodically check if the lifetime of the contents has expired in each consumer of the dynamic lists the consumers (and if so it will delete said consumer from the correspondent list) or the consumer will realize that the lifetime of a content has expired and it will notify it to the content server (and the content server will delete said consumer from the corresponding list).

Another function that the content consumer must do, according to one embodiment of the present invention is that, when the user equipment requests (31) for a unicast content to the content server, it must request it as usual under the desired signalling protocol but adding the necessary contact details to be reachable within the local network by other redirected content consumers. That means that in the content request (31) must be included at least a network address and in addition it could be included transport ports (in any transport protocol) and any other data. For example, the user equipment will notify its private IPv4 address and a TCP port where future redirected content requests will be served. That must be applied to any network and transport protocol. Contact details may be local network dependant (IPv4, IPv6...) and transport dependant (UDP, TCP...).

Alternatively, said contact details can be included in a further message send to the server or in a message send to another server that will supply it to the content server when needed.

When the user equipment (15-17) is going to be switched off it will be no longer reachable. Under that scenario, content redirections to that client will fail.

In an embodiment, to avoid this situation content consumer will notify the content server (2) (or another server which will be in charge of maintaining the dynamic list), the switch off process. Then the server will remove it from all the dynamic lists where said consumer appeared (that is, form all the dynamic lists of contents which this consumer has previously requested); so said consumer will not appear in the lists as a possible consumer to serve the content to other consumers.

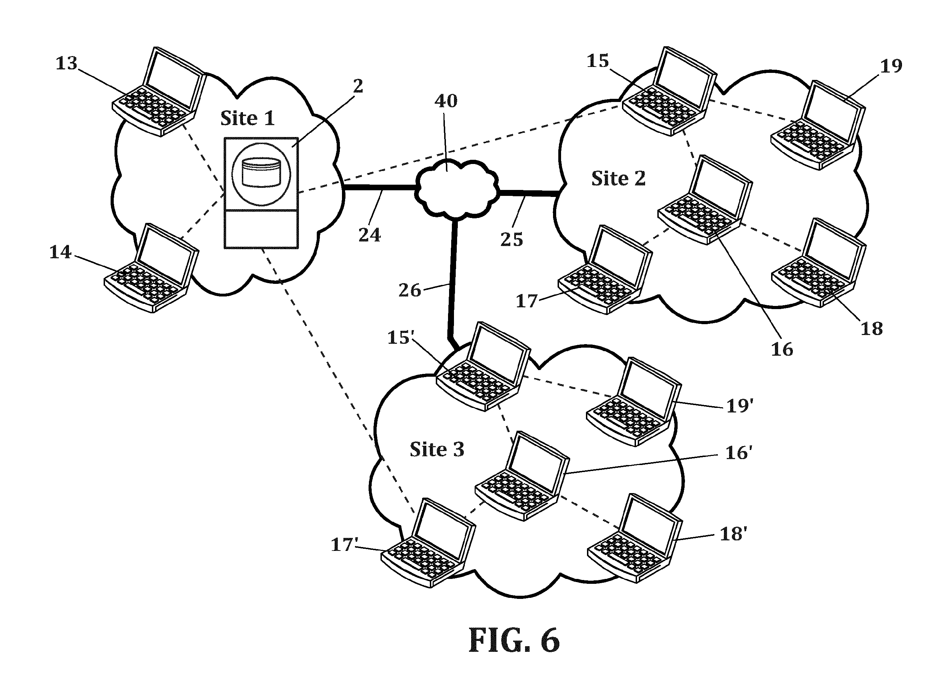

There are several use cases that can show the advantages of the invention. Here two of them can be seen as examples:
- Real time content delivery example: Massive real time unicast streaming, like a conference of the company directors to their employees. With the present invention, the streaming only needs to be delivered once per company site and it will be internally distributed within every network site with the consequent bandwidth savings in the access network and ease of deployment (no multicast nor intermediate servers are needed).
   The scenario is depicted in Figure 6, where consumers (13-19) and server (2) are entities with this new functionally already included. The clients (15-19) and (15'-19') are only homologous examples for two different local networks of different sites.
   In that case, the company director speech will be transmitted in real-time from the server. It has to be highlighted, that the content will be transmitted once to site 2 and once to site 3, and not once per content consumer (in prior art solutions, it would be transmitted 5 times to site 2 and 5 times to site 3, wasting network resources). That let decongest not only access networks from three sites (24-26) but also the whole network between sites (40). To build that embodiment, the server (2) has the role of the content server.
   First content consumers on each remote site (15) have the role of first content consumer. Next content consumers (16-19) have the role of following content consumers explained before. It has to be noted that the dynamic content distribution could also be applied within the site 1, for example to decongest the server if needed.
- On demand content delivery example: Web browsing for residential customer and enterprises. With the present invention the content will be available and distributed along the web browsers (personal computers, mobile phones, tablets...) without the need of using a proxy and with the consequent bandwidth savings within the access network of that enterprise or residential customer. In that case the embodiment will be very similar to the real-time one, but adding the advantage that the content is not real-time and can be stored within the content consumers during a period of time (validity period or TTL) defined by the content server. That way, while there is a valid TTL the content can be obtained from a local content consumer instead from the content server, with the consequent bandwidth saving.

Summarizing, the presented embodiments potentially have the following advantages when compared with the prior art:
- Resource (e.g. bandwidth) savings in the networks. Not only in the access networks but also in the network where the content server is or in the networks between the content server and the consumer network.
- Increased efficiency in the content servers, because one network flow can be consumed by several customers
- Increased QoS for the customer, because with the same network resources more services can be delivered (with better timing parameters like latency or jitter)
- Dynamical content distribution within the local network, improving the static proxy traditional architecture.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Content and media content may refer to any type of electronic materials such as music, videos, software, books, multimedia presentations, images, text and other electronic data which can be delivered as a stream or transferred, for example over a network to one or more users.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for dynamic content distribution to user equipments, the method comprising:
- A server receiving a message requesting a first content, from a first user equipment belonging to a first communications network
**characterized in that** the method further comprises the following steps:
- The server checking if there is any other user equipment belonging to said first communications network registered in a list for said first content, said list including for each communications network, user equipments belonging to said communications network which have previously requested the first content to the server.
- If there is no user equipment belonging to said first communications network registered in the list for said first content, delivering said first content from said server to said first user equipment.
- If there is at least a second user equipment belonging to said first communications network registered in the list for said first content, the server redirecting the first user equipment to said second user equipment in order to get the content.
- The server registering said first user equipment in the list for said first content.

2. A method according to claim 1, where the first communications network is a local area network.

3. A method according to any of the previous claims where the message requesting the first content sent by the first user equipment includes information which allows to reach the first user equipment within said first communications network.

4. A method according to claim 3, where the server stores said information which allows to reach the user equipment within said communications network in said list for said first content.

5. A method according to any of the claims 3-4 where the information which allows to reach the first user equipment within said first communications network includes a private IP address of the first user equipment in the first communications network.

6. A method according to any of the claims 3-5, where the step of redirecting the first user equipment to said second user equipment includes: the server sending to the first user equipment a message including information which allows to reach the second user equipment within the first communications network, where said information which allows to reach the second user equipment, has been included by the second user equipment in a previous request for said fist content sent by the second user equipment to the server.

7. A method according to claim 6, where the method further includes: the first user equipment sending a message requesting said first content to the second user equipment using the information sent by the server which allows to reach the second user equipment.

8. A method according to any of the claims 6-7, where the step of redirecting the first user equipment to said second user equipment further includes: the server including in the message to the first user equipment a backup list, said backup list including information which allows to reach other user equipments belonging to the first communications network included in the list for said first content and if the first content is not available in said second user equipment or the second user equipment is not reachable, the first user equipment sends a request for said first content to another user equipment in the backup list.

9. A method according to any of the previous claims where, when the first content is real-time, the server deletes the register of said first user equipment from the list for said content after having delivered the content to said first user equipment and if the first content is on demand the server deletes the register for said first user equipment from the list for said content after the time to live of said content has expired.

10. A method according to any of the previous claims where, if the server is informed that a user equipment included in the list for a certain content is not reachable, the server deletes said user equipment from said list.

11. A method according to any of the previous claims, where the server belongs to a second communications network different from the first communications network, where the second communications network is connected to the first communications network by an access network.

12. A system for dynamic content distribution to user equipments, the system comprising:
- A first server which comprises:
- receiving means for receiving a message requesting a first content from a first user equipment belonging to a first communications network the system being **characterized by**:
the first server further comprising:
- means for checking if there is any user equipment belonging to said first communications network previously registered in a list for said first content, said list including for each communications network, user equipments belonging to said communications network which have previously requested the first content to the server.
- means for, as a result of the checking, if there is no user equipment belonging to said first communications network in the list for said first content, sending said first content from said server to said first user equipment and if there is at least a second user equipment belonging to said first communications network registered in the list for said first content, the server sending a message to the first user equipment redirecting the first user equipment to said second user equipment.
- means for, after the receiving means receives the message requesting the first content from the first user equipment and the checking has been performed, registering said first user equipment in the list corresponding to said first content
- The user equipment belonging to the first communications network, said user equipment comprising:
- means for sending a request for a first content to the server.
- means for, after sending a request for a first content to the server, receiving a redirection message from the server to a second user equipment and means for, after receiving said redirection message, requesting said first content to the second user equipment.

13. A server for dynamic content distribution to user equipments, the server comprising:
- receiving means for receiving a message requesting a first content from a first user equipment belonging to a first communications network
the server being **characterized by** further comprising:
- means for having access and updating a list for each content stored in said server, said list including for each communications network, user equipments belonging to said communications network which have previously requested said content to the server
- means for checking if there is any user equipment belonging to said first communications network, registered in the list for said first content
- means for, as a result of the checking, if there is no user equipment belonging to said first communications network registered in the list for said first content, delivering said first content from said server to said first user equipment and if there is at least a second user equipment belonging to said first communications network registered in the list for said first content, the server sending a message to the first user equipment, redirecting the first user equipment to said second user equipment.
- means for, after the receiving means receives the message requesting the first content from the first user equipment and the checking has been performed, registering said first user equipment in the list corresponding to said first content

14. A user equipment belonging to a first communications network, said user equipment comprising which comprises:
- means for sending a message requesting a first content to a server.
- means for including in said message, information which allows to reach said first user equipment within said first communications network
- means for, after sending a request for a first content to the server, receiving a redirection message from the server to a second user equipment and means for requesting said first content to the second user equipment.
- means for, after receiving from another user equipment belonging to the first communications network, a request message for a content available in the user equipment, delivering said content to the requesting user equipment.

15. A computer program product comprising computer-executable instructions for performing the method according to any of the claims 1-10, when the program is run on a computer.
